# EUROPEAN PATENT APPLICATION

(11) **EP 1 029 512 A2**
(43) Date of publication of application: **23.08.2000**
(21) Application number: 99830611.2
(22) Date of filing: 29.09.1999
(51) Int. Cl.: A61C 1/00

(54) **A feeding and sanitizing system for dental unit water circuits**

(30) Priority: 16.02.1999 IT BO990061
(71) Applicant: CASTELLINI S.p.A., I-40013 Castelmaggiore (Bologna) (IT)
(72) Inventor: Castellini, Franco, 40124 Bologna (IT)
(74) Representative: Lanzoni, Luciano

(57) **Abstract**

A system for feeding and sanitizing the water circuits of dental units comprises the following, combined with each other: at least one second branch (7) connected to and leading into a first branch (3) for feeding a second fluid, as an alternative to a first fluid from a first feed line (1); the second branch (7) and the first feed line (1) being equipped with corresponding second cutoff means (8) and third cutoff means (9) designed to switch between feeding the first branch (3) with the first fluid amd feeding it with the second fluid when required; a first container (10) for housing handpieces (5) during sterilization, disinfection, flushing or cleaning treatments on the water circuit, and switching means (11), connected to control means (12), which can be activated by an external command or automatically upon the occurrence of certain events on the dental unit, depending on the treatment to be carried out, and which are designed to perform combinations and/or manual or automatic sequences, even repeated two or more times in succession, of opening and closing operations on first cutoff means (6), second cutoff means (8) and third cutoff means (9) in such a way as to enable the first branch (3) to perform treatment cycles with the first fluid (2) and/or alternately with the second fluid conveyed by the second branch (7).

## Description

The present invention relates to a feeding and sanitizing system for dental unit water circuits.

One of the most important parts of a dental unit is its water system. This part has undergone considerable development over the years, especially as regards its working capabilities. The water system feeds fluids used by dental equipment and patients (handpieces and tumblers with water or physiological saline) or consumer units, such as the spittoon, with swilling water.

The implementation of a system with a constantly high level of hygiene has always been required for apparatus of this kind. Consequently, solutions of various kinds have been devised which, besides ensuring that the water circuit works properly and reliably, can offer the guarantee that the water piping remains aseptic not only during treatment sessions but also during changes from one session to another.

At present, the circuitry includes a main water supply line connected to the mains and divided into a plurality of branches leading to the above mentioned working or accessory equipment. Alongside these, there are various systems, differing basically according to purpose, having different equipment and implementing different methods designed to improve the efficiency and hygiene of the circuit.

Of these methods and equipment, the ones most commonly used now are those for sterilizing and disinfecting the water pipes (for example, as regards continuous disinfection, see patents DE - 3.028.550 and DE - 3.611.329, and as regards the continuous sterilization / disinfection cycle, see patents EP - 111.249 and EP - 317.521, the latter being by the same Applicant as the present). Yet another addition to the dental equipment/patient supply branch of the system is a continuous flushing unit (see patent EP - 368.818) designed to continuously renew the water in order to eliminate all stagnant water inside the circuit when the dental unit is on. The ultimate aim of all this is to make the hygiene of dental units as complete as possible (as described in detail in patent publication EP - 734.692 in the name of the present Applicant).

However, all these systems added up together occupy a great deal of space inside the dental unit, with numerous parts branching off from the main circuit, dosing devices, compartments to house containers for the fluids, trays for the handpieces and a multiplicity of control systems. Consequently, while dental unit hygiene has greatly improved, the maintenance required to keep all the equipment in proper working order has in many cases become a demanding, time-consuming and costly task.

These factors have led to diversification in the production of dental units. In other words, dental units without some or all of the above mentioned sterilization and disinfection equipment have been created not only for market reasons (to make economical dental units) but also to simplify the internal structure of dental units.

The Applicant, thanks to its experience and continuous research in the field of equipment of the kind described above has designed a feeding and sanitizing system for dental units that is at once simple and economical in construction and that has all the disinfection, sterilization and sanitization options of high-end dental units, but is easy to use and maintain.

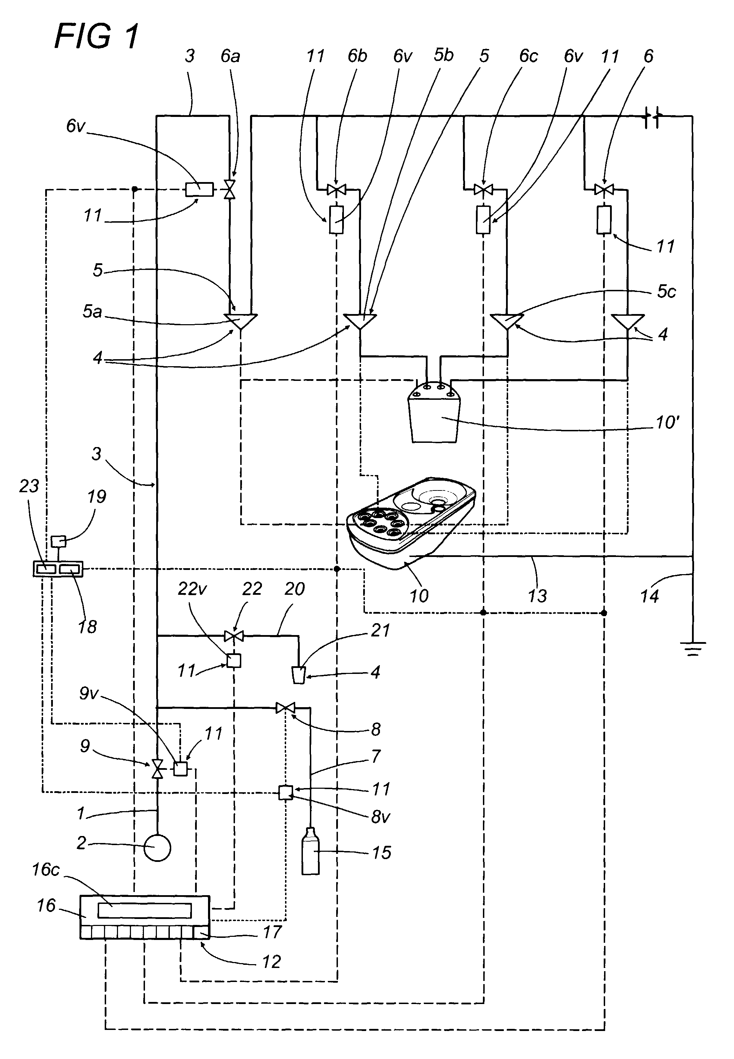

The technical features of the present invention, in accordance with the above-mentioned aims, are set out in the claims herein and the advantages more clearly illustrated in the detailed description which follows, with reference to the accompanying drawing, which represents a preferred embodiment without restricting the scope of the invention and which schematically illustrates a dental unit water circuit equipped with the feeding and sanitizing system made according to the present invention.

With reference to the accompanying drawing, a system for feeding and sanitizing the water circuits in a dental unit comprises a main fluid supply line, labelled 1 as a whole, and connected at one end to a source 2 supplying a first fluid (usually water from the mains) and at the other end to operating parts of the dental unit through a first branch 3 for feeding items 4 of dental equipment comprising at least a plurality of handpieces 5.

The handpieces 5 are only schematically illustrated in the drawing (since they are all of known type) and may be a syringe 5a, a micromotor 5b, a turbine 5c, and so on.

Each of the handpieces 5 is equipped with first cutoff means 6 (conventional valves) for turning off the fluid supply to the handpiece 5 as required by the dentist. In particular, each of the first cutoff means (6a, 6b, 6c, etc.) will be opened on activation, that is, when the dentist selects the handpiece to be used.

This water circuit comprises, combined with each other, a second branch 7, a first container 10 and switching means 11.

Looking in more detail (still with reference to the accompanying drawing), the second branch 7 is connected to and leads into a first branch 3 for feeding a second fluid, as an alternative to the first fluid, into the first branch. The second branch 7 and the first feed line 1 are equipped, respectively, with second and third cutoff means 8 and 9 (conventional valves in this case too) designed to switch between one or other of the two available fluids to feed the first branch 3, as selected by the dentist working on the dental unit.

The second branch 7, unlike the feed line 1, is fed from a related independent and/or replaceable tank 15 on the dental unit. The tank 15 consists preferably of a second container which can be connected to the second branch 7 and which can be changed according to the type of fluid to be fed to the first branch 3, this depending on the requirements of the dentist at a particular time.

The tank 15 may be a second container of the non-reusable type or a second container that can be sterilized and reused.

Looking in more detail, and purely by way of example, the second fluid may be purified water, purified water with pharmaceuticals added to act on a patient being treated, or a sterile, isotonic saline solution, or it may be a disinfecting/sterilizing solution used to sanitize the water system of the dental unit.

The first container 10 is used to house the handpieces 5 or the corresponding hose fittings that connect them to the dental unit (not illustrated since they are of well-known type) when the line 1 is being flushed, sterilized or disinfected or when the entire water system is being cleaned. The first container 10 may be a basic component of the dental unit (as shown in the illustration), attached to or built into the body of the dental unit, and it is preferably equipped with a pipe 13 leading into a drain 14, which, in the case illustrated purely by way of example, may be the main drain of the dental unit, but may also be one of several independent drains, according to the specific requirements of the dental surgery.

Alternatively, the first container 10 may be a self-contained element 10' which is independent of the dental unit and which may be applied to, or positioned near, the dental unit when treatment on the first branch 3 is carried out.

The above mentioned switching means 11 control the cutoff elements 6, 8 and 9 and are in turn controlled by control means 12.

The switching means 11 may be manual or automatic, that is to say, they may be activated by an external command or automatically when particular events occur on the dental unit and according to the type of treatment to be carried out. In other terms, the switching means 11 interact with the control means 12 to open and close the first, second and third cutoff means 6, 8 and 9 through combinations and/or manual or automatic sequences, even repeated two or more times in succession, in order to allow the treatments to be performed on the first branch 3 using the first fluid 2 and/or, alternately, using the second fluid conveyed by the second branch 7.

To allow these operations to be performed, each of the first, second and third cutoff means 6, 8 and 9 is controlled by a corresponding activation unit 6v, 8v and 9v (of conventional, electrical or pneumatic type) constituting the above mentioned switching means 11, which is controlled by the control means 12.

The control means 12 may be any of diverse types.

If the dental unit is equipped with a microprocessor 16 to control its main and auxiliary functions, the control means 12 may consist of a pushbutton 17 located on the dental unit (or on a suitable console 16c) and controlled directly by the microprocessor 16 in such a way as to open and close the cutoff means 6, 8 and 9 in synchronized sequence according to time and/or fluid flow parameters stored in the microprocessor 16.

Thanks to this possibility, the control means 12 are activated by the microprocessor 16 according to parameters defined by events that occur on the dental unit (for example, an end of treatment session that coincides with resetting the position of the dentist's chair).

Alternatively, the control means 12 may consist of a pair of pushbuttons 18 and 23 which are located on the dental unit, together with other pushbuttons (not illustrated) and one of which is connected to adjustable timing means 19, illustrated as a block in the accompanying drawing. The timing means 19 may, for example, consist of a timer or a compressed air tank with an adjustable valve to allow air out through its outlet.

The timing means can be activated when the first cutoff means 6 open or close or when the branch 3 is filled (that is, upon a command given directly by the dentist) and are designed to re-open or re-close the cutoff means after a preset time. The second pushbutton 23 can be connected to the second and third cutoff means 8 and 9 in order to switch between the second branch 7 and the source of first fluid 2 on the feed line 1.

Thanks to a system of the type described above, the dentist can perform a wide range of operations and treatments, such as, for example, supplying physiological saline or medical solution for the patient instead of normal water from the mains.

In addition to this, the system for changing and selecting the second fluid in the second branch permits a series of flushing and sterilizing/disinfecting treatments to clean the line quickly and easily.

Thus, for example, the dentist may press the pushbutton 17 or 18 to perform the following single sequence of operations on the first cutoff means 6: open for a preset time or until a defined quantity of first or second fluid has flowed through to fill the first branch 3 with the selected fluid and to supply the handpieces 5; then close the first cutoff means 6 so as to time flush the first branch 3.

Another possible sequence of operations is the following: switch feed from the supply line 1 to the second branch 7 so as to feed the first branch 3 with a second sterilizing/disinfecting fluid or with a washing fluid; place the handpieces 5 in the first container 10; open the second cutoff means 8 and close the third cutoff means 9.

At this point, the first cutoff means 6 open for a preset time or until a defined quantity of the selected second fluid has flowed through so as to completely renew the fluid in the circuit, that is, in the first branch 3, until the fluid flows out of the handpieces 5. Next, the first cutoff means are re-closed, again after a preset time or, depending on the treatment, by measuring the quantity of fluid flowing out.

After this cycle, and, in some cases, after a preset time during which the second fluid acts inside the water circuit, the second and third cutoff means 8 and 9 switch again. Thus, the second cutoff means 8 close and the first and third cutoff means 9 re-open, by pressing the pushbuttons 18 and 20 or through a programmed sequence of the microprocessor 16, for a preset time or after a preset quantity of first fluid has flowed through to renew the fluid inside the first branch 3 and to flush the first branch by allowing the fluid to flow out through the handpieces 5. After flushing, the first cutoff means 6 are re-closed to keep the first branch 3 in working condition with a medical fluid, provided always that the second container 15 on the second branch 7 has been changed (because a second fluid is expected to be used during the treatment session).

As shown in the accompanying drawing, the first branch 3 may include, as part of the items of dental equipment 4, a third branch 20 which is designed to feed fluid to a tumbler 21 and which is equipped with fourth cutoff means 22. Advantageously, the control means 12 can be connected to the fourth cutoff means 22 of the third branch 20, which has a switching unit 22v similar to those described above for the other cutoff means and designed to enable treatments to be performed also on the third branch.

A system made in this way achieves the aforementioned aims thanks to a water circuit with an extremely simple structure that occupies a minimum of space, is economical and offers all the patient and circuit treatment facilities offered by dental units at the high end of the market.

The possibility of switching between an alternative second fluid and water makes it possible to use not only a medicating liquid for patients but also sterilizing/disinfecting solutions for the circuits which, combined with the possibility of rapidly flushing the circuits, allows the dental unit to be quickly reset to operating conditions.

The invention described can be subject to modifications and variations without thereby departing from the scope of the inventive concept.

Moreover, all the details of the invention may be substituted by technically equivalent elements.

## Claims

1. A system for feeding and sanitizing the water circuit of a dental unit, where the water circuit comprises a fluid supply line (1) connected at one end to a source supplying a first fluid (2) and at the other end to the dental unit through a first branch (3) feeding items (4) of dental equipment comprising at least a plurality of handpieces (5); first means (6) for cutting off the fluid being envisaged on the first branch (3) feeding each of the handpieces (5) so as to allow them to be supplied with fluid when required; the system being characterized in that it comprises the following parts, combined with each other:
- at least one second branch (7) connected to and leading into the first branch (3) for feeding a second fluid to the dental equipment (4) instead of the first fluid fed by the supply line (1); the second branch (7) and the first supply line (1) being equipped, respectively, with second and third cutoff means (8) and (9) designed to switch between feeding the first branch (3) with the first fluid and feeding it with the second fluid from the second branch (7);
- a first container (10) used to house the handpieces (5) or the corresponding hose fittings that connect them to the dental unit when flushing, sterilization, disinfection or other cleaning treatments are being performed on the water circuit;
- switching means (11) which are controlled by control means (12) and which may be activated by an external command or automatically when particular events occur on the dental unit and according to the type of treatment to be carried out in order to open and close the first, second and third cutoff means (6), (8) and (9) through combinations and/or manual or automatic sequences, even repeated two or more times in succession, so as to allow the treatments to be performed on the first branch (3) using the first fluid (2) and/or, alternately, using the second fluid conveyed by the second branch (7).

2. The system according to claim 1, characterized in that the switching means (11) act on each of the first cutoff means (6) in such a way as to perform the following single sequence of operations:
- opening for a preset time or until a defined quantity of first fluid (2) or second fluid has flowed through to fill the first branch (3) with the selected fluid and to flow out through the handpieces (5);
- closing of the first cutoff means (6).

3. The system according to claim 1, characterized in that the switching means (11) act on each of the first, second and third cutoff means (6), (8) and (9) in such a way as to perform the following sequence of operations:
- switching between feeding the first branch (3) from the supply line (1) to feeding it from the second branch (7) by closing the third cutoff means (9) on the feed line (1) together or in succession, while opening the second cutoff means (8) on the second branch (7);
- opening of the first cutoff means (6) for a preset time or until a defined quantity of the selected second fluid from the second branch (7) has flowed through so as to completely renew the fluid in the first branch (3) with the second fluid from the second branch (7) until the fluid flows out of the handpieces (5);
- closing of the first cutoff means (6) when a preset time has elapsed or a defined quantity of fluid has flowed through;
- switching again between feeding of the first branch (3) from the second branch (7) to feeding it from the first feed line (1) by closing the second cutoff means (8) on the second branch (7) together or in succession, while opening the third cutoff means (9) of the first feed line (1) in order to return to the configuration in which the first branch (3) is fed with the first fluid (2);
- opening of the first cutoff means (6) for a preset time or after a defined quantity of the first fluid (2) has flowed into the first branch (3) so as to flush the first branch by allowing the first fluid (2) to flow out through the handpieces (5);
- closing of the first cutoff means (6) when a preset time has elapsed or a defined quantity of fluid has flowed through.

4. The system according to claim 1, characterized in that the first container (10) of the handpieces (5) is a basic component of the dental unit, either built into it or connected to it, and is equipped with a pipe (13) leading into a drain (14).

5. The system according to claim 1, characterized in that the first container (10) of the handpieces (5) is a self-contained element which is independent of the dental unit and which may be applied to, or positioned near, the dental unit when treatment in the first fluid feed branch (3) is carried out.

6. The system according to claim 1, characterized in that the second branch (7) is fed from an independent or interchangeable tank (15).

7. The system according to claim 1, characterized in that the second branch (7) is fed from a tank (15) which consists of a second container that can be connected to the second branch (7) and that can be changed according to the type of fluid to be fed to the first branch (3), this depending on requirements at any particular time.

8. The system according to claim 1, characterized in that the second fluid is purified water.

9. The system according to claim 1, characterized in that the second fluid is purified water with pharmaceuticals added to act on a patient being treated.

10. The system according to claim 1, characterized in that the second fluid is a sterile, isotonic saline solution.

11. The system according to claim 1, characterized in that the second fluid is a sterilizing/disinfecting liquid.

12. The system according to claim 7, characterized in that the tank (15) is a second container of non-reusable type.

13. The system according to claim 7, characterized in that the tank (15) is a second container that can be sterilized and reused.

14. The system according to claim 1, where the dental unit is equipped with a microprocessor (16) designed to control its main and auxiliary functions, the system being characterized in that the control means (12), consisting of a pushbutton (17) located on the dental unit, is controlled by the microprocessor (16) in such a way as to to open and close the first, second and third cutoff means (6), (8) and (9) in synchronized sequence according to time and/or fluid flow parameters stored in the microprocessor (16).

15. The system according to claim 14, characterized in that the control means (12) are activated by the microprocessor (16) according to parameters defined by events that occur on the dental unit.

16. The system according to claim 1, characterized in that the control means (12) consist of a pair of pushbuttons (18, 23) located on the dental unit, one of which (18) is connected to adjustable timing means (19) that can be activated when the first cutoff means (6) open or close or when the branch (1) is filled and that are designed to re-open or re-close the cutoff means after a preset time; the second pushbutton (23) being connected to the second and third cutoff means (8, 9) in order to switch from one to the other according to the type of treatment to be performed.

17. The system according to claim 1, characterized in that each of the first, second and third cutoff means (6), (8) and (9) is controlled by a corresponding activation unit (6v, 8v, 9v), constituting the swiching means (11) which are connected to the control means (12).

18. The system according to claim 1, where the first fluid feed branch (3) includes, as part of the items of dental equipment (4), a third branch (20) designed to feed fluid to a tumbler (21) and equipped with fourth cutoff means (22), the system being characterized in that the control means (12) are connected to the fourth cutoff means (22) of the third branch (20), which is equipped with a corresponding switching unit (22v), in such a way as to enable treatment to be carried out on the third branch.
